# EUROPÄISCHE PATENTANMELDUNG

(11) **EP 0 769 244 A1**
(43) Veröffentlichungstag der Anmeldung: **23.04.1997**
(21) Anmeldenummer: 96116849.9
(22) Anmeldetag: 19.10.1996
(51) Int. Cl.: A01K 93/02

(54) **Schwimmer für das Nachtangeln**

(30) Priorität: 20.10.1995 IT PD950198
(71) Anmelder: Montemezzo, Fabrizio, 30030 Pianiga-Mellaredo (VE) (IT)
(72) Erfinder: Montemezzo, Fabrizio, 30030 Pianiga-Mellaredo (VE) (IT)
(74) Vertreter: Gustorf, Gerhard, Dipl.-Ing.

(57) **Zusammenfassung**

Es handelt sich um einen neuen Schwimmer für das Nachtangeln mit zwei elektrischen Kontakten (5,6) am oberen und unteren Teil des Stabs (4), die durch einen batterieversorgten elektronischen Schaltkreis (3) im eiförmigen Teil des Schwimmers versehen sind. Wird der Schwimmer vom anbeißenden Fisch in das Wasser gezogen, so strömt durch das Wasser Strom zwischen den beiden Kontakten (5,6), und diese Leitung wird durch den elektronischen Schaltkreis (3) erfaßt, der die Lampe (8) am oberen Stabende einschaltet.

## Beschreibung

Die vorliegende Erfindung betrifft die Angelfischerei und insbesondere die Anzeige des beim Nachtangeln anbeißenden Fischs.

Die beim Angeln verwendeten Schwimmer dienen dazu, den Haken mit dem Köder in der Tiefe zu halten und zeigen gleichzeitig an, wenn ein Fisch angebissen hat, da der anbeißende Fisch am Haken zieht und damit das Untertauchen des Schwimmers bewirkt. Zu diesem Zweck haben die Schwimmer lebhafte Farben, um sie auf dem Wasser zu erkennen und sie außerdem von den Schwimmern anderer Angler zu unterscheiden.

Beim Nachtangeln sind die Schwimmer in der Dunkelheit nicht erkennbar, weshalb mit fluoreszierendem Lack beschichtete Schwimmer oder Schwimmer mit einer kleinen, stets erleuchteten Lichtquelle verwendet werden. Diese Schwimmer sind nachts besser sichtbar, zwingen den Angler jedoch zu erhöhter und ständiger Aufmerksamkeit, um auch die geringste Bewegung festzustellen. Es gibt mechanische Systeme, die in der Nähe der Rute an der Schnur angebracht werden und die Erhöhung der Schnurspannung erfassen. Die Anzeige dieser Mechanismen erfolgt mit Verzögerung, da sie die Erhöhung der Schnurspannung feststellen, wenn die ganze Schnur vom Anzeiger bis zum Haken vom anbeißenden Fisch gespannt wird, wobei die Schnur auch eine Länge von mehreren Dutzend Metern aufweisen kann.

Um diese Schwierigkeiten auszuschalten, wurde ein neuer Schwimmertyp für das Nachtangeln entwickelt, der ein eindeutiges Signal gibt, sobald der Fisch anbeißt.

Es ist vorauszuschicken, daß es schwierig ist, kleine Bewegungen von Lichtquellen in der nächtlichen Dunkelheit zu erkennen, während das Aufleuchten und Erlöschen auch kleiner Lichtquellen, auch in großer Entfernung und auch ohne aufmerksame Beobachtung jedoch einfach ist.

Der neue, den Gegenstand dieses Patents bildende Schwimmer ist mit einer kleinen, elektrischen Lichtquelle versehen, die nur dann aufleuchtet, wenn der Schwimmer selbst ins Wasser eintaucht.

Im wesentlichen umfaßt der neue Schwimmer zwei elektrische Kontakte, die über einen batterieversorgten, elektronischen Schaltkreis verbunden sind, welcher eine kleine Lampe einschaltet, sobald beide elektrischen Kontakte eingetaucht sind.

Stromkreis und Batterie können am eiförmigen Teil des Schwimmers oder an dem kleineren Teil am unteren Ende angebracht werden; einer der elektrischen Kontakte befindet sich an dem Teil des Stabs, der normalerweise eingetaucht ist, während der zweite elektrische Kontakt sich an einer beliebigen Stelle des Schwimmers befindet, die normalerweise aus dem Wasser ragt; vorzugsweise am Stabteil unmittelbar über dem Schwimmer. Die Lampe oder ein anderer Lichtquellentyp kann an jeder beliebigen Stelle des Schwimmers angebracht werden; es empfiehlt sich jedoch, diese Lichtquelle am oberen Ende des Stabs zu befestigen.

Während des Wartens auf das Anbeißen des Fischs ist einer der elektrischen Kontakte im Wasser und der andere Kontakt oberhalb des Wassers; in diesem Zustand wird kein Strom geleitet, und der elektronische Schaltkreis hält die Lichtquelle ausgeschaltet.

Wenn der Fisch anbeißt, zieht er auch den Schwimmer in das Wasser; auf diese Weise tauchen beide elektrischen Kontakte ein und erlauben eine wenn auch nur minimale Stromleitung zwischen ihnen, die durch den Stromkreis erfaßt wird, so daß die Lichtquelle aufleuchtet. Nun kann der Angler entsprechend handeln, zum Beispiel indem er die Rute in seine Richtung zieht oder beginnt, die Schnur aufzurollen.

Der Schwimmer kann geöffnet werden, um die erschöpfte Batterie auszutauschen. Alternativ dazu ist es möglich, einen "passiven" Stromkreis zu benutzen, der nur beim Durchgang von Strom zwischen den beiden Kontakten anspricht, und eine Leuchtdiode an der Spitze des Schwimmerstabs; in diesem Fall ist die Stromaufnahme des Schaltkreises und der Leuchtdiode minimal, so daß eine Langzeitbatterie verwendet und der Schwimmer geschlossen und versiegelt werden kann.

Diese Stromkreise sind einfach im Handel beschaffbar. Eventuell kann der Schwimmer auch beim Angeln am Tage verwendet werden, indem einer der beiden Kontakte mit einem Röhrchen oder anderen, wasserdichten Mittel abgedeckt wird.

Am oberen Ende des Schwimmerstabs kann eine farbige, transparente Kappe angebracht werden, damit jeder Angler seinen Schwimmer erkennen kann.

Eine kreisförmige Hülle von gleichem Durchmesser wie dem Außendurchmesser des oberen Stabs kann auf diesem Stab gleiten und den Leuchtkörper schützen bzw. den Kontakt abdecken, um das Aufleuchten der Lampe zu vermeiden.

Der eiförmige Teil des Schwimmers kann mit Wasser gefüllt werden, um das Gewicht-/Volumenverhältnis zu verändern und so die Merkmale des Schwimmers den verschiedenen Angelsituationen anzupassen.

Hierzu genügt es, daß beispielsweise der Stab kegelstumpfförmig ist und der eiförmige Teil aus einem eiförmigen Behälter mit zwei Öffnungen besteht, eine am oberen und eine am unteren Ende, und wobei dieser Behälter beim Verschieben am in diese Öffnungen gesteckten Stab entlang die Öffnung und die Schließung der Öffnungen bewirkt, so daß Wasser oder anderes in den Behälter gefüllt werden kann.

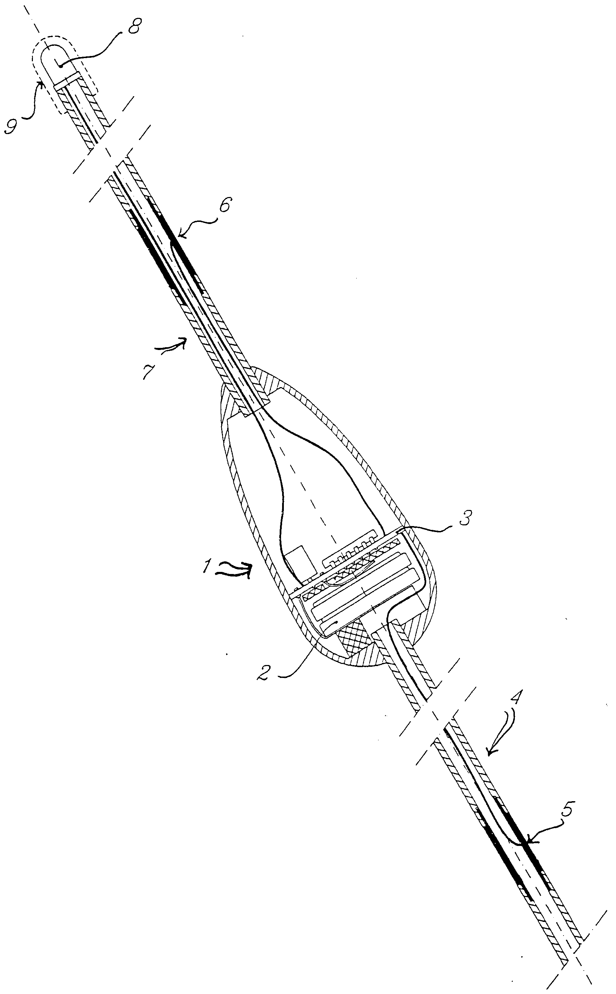

In der beiliegenden Figur wird beispielgebend und nicht in einschränkender Weise eine praktische Lösung der Erfindung in senkrechter Richtung präsentiert.

Im eiförmigen Teil (1) des Schwimmers befinden sich die Batterien (2) und die Elektronikschaltung (3).

Am unteren Teil des Stabs (4) befindet sich der elektrische Kontakt (5), der stets im Wasser eingetaucht ist, während sich der zweite elektrische Kontakt (6) am oberen Teil des Stabs (7) befindet; am Ende des oberen Stabteils (7) befindet sich die Leuchtdiode (8), die mit einer farbigen, transparenten Kappe (9) abgedeckt sein kann.

Dies sind die schematischen Vorgänge, die einem Fachmann die Herstellung der Erfindung ermöglichen; in der Praxis können Varianten angebracht werden, ohne das innovative Konzept zu beeinträchtigen.

## Patentansprüche

1. Angelschwimmer, dadurch gekennzeichnet, daß er mit zwei elektrischen Kontakten versehen ist, die über einen elektronischen Schaltkreis mit Batterie verbunden sind, welcher eine kleine Lampe einschaltet, sobald die elektrischen Kontakte in das Wasser eintauchen.

2. Schwimmer für das Nachtangeln gemäß Patentanspruch 1, dadurch gekennzeichnet, daß der Schaltkreis und die Batterie entweder im unteren Ende oder im eiförmigen Teil des Schwimmers angebracht werden, einer der elektrischen Kontakte sich in dem Teil des Stabs befindet, der normalerweise im Wasser eingetaucht ist, der zweite elektrische Kontakt sich an einer beliebigen, normalerweise aus dem Wasser ragenden Stelle des Schwimmers befindet, vorzugsweise am Stabteil oberhalb des Wassers, und die Lichtquelle sich am oberen Stabende befindet.

3. Schwimmer für das Nachtangeln gemäß Patentansprüchen 1, 2, dadurch gekennzeichnet, daß er eine farbige, transparente Kappe um die Lichtquelle aufweist.

4. Schwimmer für das Nachtangeln gemäß Patentansprüchen 1, 2, 3, dadurch gekennzeichnet, daß er eine kreisförmige Hülle mit gleichem Durchmesser wie dem Außendurchmesser des oberen Stabs aufweist, die auf diesem Stab gleiten und den Leuchtkörper schützen bzw. den Kontakt abdecken kann, um das Aufleuchten der Lampe zu vermeiden.

5. Schwimmer für das Nachtangeln gemäß Patentansprüchen 1, 2, 3, 4, dadurch gekennzeichnet, daß der eiförmige Schwimmerteil mit Wasser gefüllt werden kann, um das Gewicht-/Volumenverhältnis zu verändern.

6. Schwimmer für das Nachtangeln gemäß Patentanspruch 5, dadurch gekennzeichnet, daß der Stab kegelstumpfförmig ist, während der eiförmige Teil aus einem eiförmigen Behälter mit zwei Öffnungen besteht, einer unteren und einer oberen, und daß dieser Behälter beim Verschieben am in diese Öffnungen gesteckten Stab entlang die Öffnung und die Schließung der Öffnungen bewirkt, so daß Wasser oder anderes in den Behälter gefüllt werden kann.
